# EUROPEAN PATENT APPLICATION

(11) **EP 3 291 180 A1**
(43) Date of publication of application: **07.03.2018**
(21) Application number: 16186640.5
(22) Date of filing: 31.08.2016
(51) Int. Cl.: G06T 17/00, G06K 9/00, G06T 7/30

(54) **METHOD FOR CREATING A DIGITAL TWIN OF A ROOM**

(71) Applicant: Siemens Aktiengesellschaft, 80333 München (DE)
(72) Inventor: Johnson, Rebecca, 81825 München (DE)

(57) **Abstract**

The present invention relates to a method for creating a digital twin of a room with at least one object, comprising the steps of Receiving a point cloud, wherein the point cloud is obtained by a scanning unit which at least partially scans the room, Determining a partial point cloud of the point cloud, wherein the partial point cloud refers to the at least one object in the room, Receiving a plurality of models and Comparing the partial point cloud with the plurality of models to identify at least one matching model, if at least one matching model is identified, replacing the partial point cloud with the at least one matching model for creating the digital twin. The present invention further relates to a corresponding device and computer program.

## Description

### 1. Technical field

The present invention relates to a method for creating a digital twin of a room and to a corresponding device and computer program. The invention is particularly used in the field of digital technologies, including digital factory.

### 2. The prior art

Digital plans for rooms or buildings, such as factories or other real estate are known from the prior art. However, these digital plans are disadvantageously often non-existent or just rarely implemented. For example, newly acquired buildings often have no digital plans at all or just outdated digital plans.

Reasons for the lack or insufficiency of digital plans include measurement errors, safety precautions, different ordered materials, lighting/electrical infrastructure issues or miscommunications and improvisations during required restructuring of these digital plans.

Hence, there is an increasing need to update these non-existent or just rarely implemented digital plans. For example, the incomplete or outdated digital plans have to be manually updated during the implementation phase. Further, missing plans have to be manually recreated in a complex and time-consuming process, including detailed measurements.

One approach, known as laser scanning, and corresponding devices for laser scanning, known as laser scanners are used in this context for analyzing real-world objects. In detail, in a first step, data is collected about e.g. the shape and dimension of the real-world object. More precisely a point cloud of geometric samples on the surface of the subject is created. In other words, the real-world object is scanned in e.g. three dimensions by a 3D laser scanner, such as Faro Focus 3D laser scanner, resulting in a point cloud or scan. Then, the resulting point cloud can be imported to software.

In a further step, the point cloud can be used to extrapolate the shape of the subject (referred to as reconstruction). The reconstruction of the real-world object is a technology of a wide variety of fields, such as Computer Aided Design (CAD) or Computer Aided Design and Drafting (CADD). For example, the CAD software can be used to create a database of CAD models for further matching purposes. However, usually the matching of the point cloud to the CAD model has to be performed manually, such as identifying and positioning the matching CAD models.

It is therefore an objective of the invention to provide a method for creating a digital twin of a room with at least one object in an efficient and reliable manner.

### 3. Summary of the invention

In accordance with one aspect of the invention there is provided a method for creating a digital twin of a room with at least one object, comprising:
a. Receiving a point cloud, wherein
b. the point cloud is obtained by a scanning unit which at least partially scans the room;
c. Determining a partial point cloud of the point cloud, wherein
d. the partial point cloud refers to the at least one object in the room,
e. Receiving a plurality of models,
f. Comparing the partial point cloud with the plurality of models to identify at least one matching model,
g. if at least one matching model is identified, replacing the partial point cloud with the at least one matching model for creating the digital twin.

Accordingly, the method is directed to a method for creating a digital twin of a room with at least one object. Thereby, the object can be referred to as target object or object to be created. The one or more objects are part of the room of a building or factory.

The method takes two data sets as input, namely a point cloud of the objects and a plurality of models. The point cloud is generated by a scanning unit which at least partially scans the room. Accordingly, the entire point cloud can be associated with more than one object in the room, if a plurality of objects is scanned at once. Thus, the partial point cloud corresponding to the at least one object is determined.

The term point cloud can be defined as e.g. two-dimensional or three-dimensional coordinates of the surface of the at least one object.

The plurality of models can be considered as a set or container, wherein the set comprises a plurality of two-dimensional or three-dimensional models of objects. Thereby, the set of models can be updated and extended with further models according the requirements or application field in a flexible manner.

Then, the partial point cloud is compared with one or more models of the plurality of models. Distinct comparison approaches might be suitable and can be used as desired. For example, thresholds or other parameters can be defined for a target-performance comparison.

For example, the parameter or flag of a partial and complete match can be set. In many cases it might be sufficient that the target object just partially matches with the matching model (e.g. in the substantial parts of the target object). In other cases, a complete match may be required.

Further, the minimum or maximum degree of similarity between the target object and the matching model can be set. The actual similarity can be compared with a predefined threshold. If the actual similarity exceeds the threshold, the similarity will be sufficient or high enough.

Having identified at least one model, which matches with the at least one object, the partial point cloud is replaced with the matching model.

If a plurality of models match with the one object, the best candidate among all potential candidates of matching models can be selected. The selection can be based on distinct filtering criteria and matching scores, such as highest similarity or even identity.

In most of the cases, it may be necessary or preferable to additionally use correction, compensation or normalization procedures. Usually, the real-world object is not depicted as precise as the model and thus may differ from the model to a great extend. Thus, the deviations, such as distortions, enlargements and reductions in the size or dimension of the model and the point cloud have to be compensated or corrected. Further, the model can be normalized. For example, the real-world object may be illustrated directly at the front in a distance of ten meters.

In one aspect of the invention the point cloud is generated by a scanning unit which at least partially scans the room in two or three dimensions. Accordingly a laser scanner, radar detector or ultrasonic device can be used for scanning the objects in the room. Thus, the method is flexible and easily applicable with regard to the generation of the point cloud.

In another aspect of the invention the step of determining the partial point cloud comprises the steps of identifying and extracting the partial point cloud from the point cloud on the basis of a plurality of distance values. Accordingly, the partial point cloud and most likely point cloud of the at least one object is identified and extracted from the complete point cloud of all possible object using distance values or coordinates. For example, the point cloud with the smallest distance values can be chosen. Additionally or alternatively further values can be considered, such as depth.

In another aspect of the invention, the plurality of models is a library or database with CAD models. As previously outlined, common models are CAD models, which can be stored in a library or database. This way, the CAD models and the library are advantageously machine-readable and can be efficiently processed by means of a computer. In particular, the library or database can be easily, reliably and efficiently adapted with any modification options, such as by deletion, replacement, update, extension etc.

In another aspect of the invention, the at least one matching model replacing the partial point cloud is displayed to a user. Accordingly, the method is user-friendly and the user can interact in an easy manner. For example, the user may be prompted to confirm or adapt the matched object or the overall resulting digital twin. This way, the reliability of the digital twin can be improved.

In another aspect of the invention, an alert is output to a user if no matching model is identified. Accordingly, in this case no match is found e.g. due to an insufficient match (low similarity) and no replacement takes place. The output of the alert provides a feedback and warning to the user. The user can decide and choose which actions to be performed next, such as refining the set of models or thresholds for the target-performance comparison or reject the digital twin.

The invention is also directed to a device for creating a digital twin of a room having means for performing the above method.

The invention is further directed to a computer program comprising instructions for implementing the above method.

### 4. Short description of the drawings

In the following detailed description, presently preferred embodiments of the invention are further described with reference to the following figure:

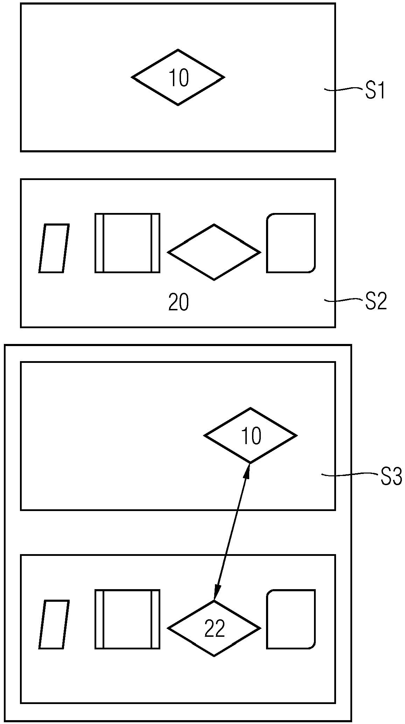

- Fig. 1: shows a flow chart for creating a digital twin of a room according to the invention.

### 5. Detailed description of preferred embodiments

As illustrated in Fig. 1, the method is designed to automatically detect matching CAD models in scans, such as laser scans or photogrammetric scans.

In a first step S1, one or more objects are scanned in two or three dimensions in a room, resulting in a point cloud. Then, a partial point cloud 10 of the point cloud is determined

Further, the CAD models 20 are searched in the partial point cloud 10 in step S3. Therefore, in step S2, one or more libraries or databases can be filled with the CAD models 20, before the search. For example, the libraries can be filled with CAD models 20, for example CAD models with regard to buildings and factories. The partial point cloud 10 is compared with the CAD models 20 in the library during a search and replace step S3. If a match is found, the partial point cloud 10 is replaced by the corresponding or matching CAD model 22.

Having identified the match, one or more further steps (not shown in Fig. 1) can be performed, such as detecting planes to find further features of the object, such as walls and floors of the building.

The resulting model can be used as digital twin of the object, such as buildings and factories.

The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language (e.g., Objective-C, Java), including compiled or interpreted languages, and it can be deployed in any form, including as a stand-alone program or as a module, component, subroutine, or other unit suitable for use in a computing environment. Suitable processors for the execution of a program of instructions include, by way of example, both general and special purpose microprocessors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computer system can include clients and servers. A client and server are generally remote from each other and typically interact through a network. The relationship of client and server arises by virtue of computer programs running on the respective computers and having a client-server relationship to each other.

A number of embodiments have been described. Nevertheless, it will be understood that various modifications may be made.

For example, elements of one or more embodiments may be combined, deleted, modified, or supplemented to form further embodiments. As yet another example, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. Method for creating a digital twin of a room with at least one object, comprising:
a. Receiving a point cloud, wherein
b. the point cloud is obtained by a scanning unit which at least partially scans the room;
c. Determining a partial point cloud (10) of the point cloud (S1), wherein
d. the partial point cloud (10) refers to the at least one object in the room,
e. Receiving a plurality of models (20, S2),
f. Comparing the partial point cloud (10) with the plurality of models (20) to identify at least one matching model (22),
g. if at least one matching model (22) is identified, replacing the partial point cloud (10) with the at least one matching model (20) for creating the digital twin (S3).

2. Method according to claim 1, wherein the point cloud is generated by the scanning unit which at least partially scans the room in two or three dimensions.

3. Method according to claim 1 or claim 2, wherein the step of determining the partial point cloud comprises the steps of identifying and extracting the partial point cloud (10) from the point cloud on the basis of a plurality of distance values.

4. Method according to any of the preceding claims, wherein the plurality of models (20) is a library or database with CAD models.

5. Method according to any of the preceding claims, wherein the at least one matching model (20) replacing the partial point cloud (10) is displayed to a user.

6. Method according to any of the preceding claims, wherein an alert is output to a user if no matching model is identified.

7. A device for creating a digital twin of a room having means for performing the method according to any of the preceding claims.

8. The device according to claim 7, wherein the device is part of a scanning unit.

9. A computer program comprising instructions for implementing the method in accordance with any of the preceding claims.
